# EUROPEAN PATENT APPLICATION

(11) **EP 4 554 315 A1**
(43) Date of publication of application: **14.05.2025**
(21) Application number: 24847254.0
(22) Date of filing: 04.07.2024
(51) Int. Cl.: H04W 76/10

(54) **COMMUNICATION METHODS, DEVICE, SYSTEM AND READABLE STORAGE MEDIUM**

(30) Priority: 22.09.2023 CN 202311245888
(71) Applicant: Huawei Technologies Co., Ltd., Shenzhen, Guangdong 518129 (CN)
(72) Inventor: GUO, Songsong, Shenzhen, Guangdong 518129 (CN)
(74) Representative: Körber, Martin Hans
(86) International application number: PCT/CN2024/103560
(87) International publication number: WO 2025/060588

(57) **Abstract**

This application relates to the field of wireless communication technologies, and discloses a communication method, a device, a system, and a readable storage medium. A first AP sends forwarding entry update information to an AC when detecting that a wireless network connection between a STA and the first AP is disconnected, and/or a second AP sends the forwarding entry update information to the AC after detecting that a wireless communication connection between the second AP and the STA is established. Then, the AC may update, based on the received forwarding entry update information, a historical forwarding entry (corresponding to a mapping relationship between a port connected to the first AP on the AC and a STA identifier of the STA) corresponding to the STA in a forwarding table of the AC to a current forwarding entry (corresponding to a mapping relationship between a port connected to the second AP on the AC and the STA identifier of the STA). In this way, in a scenario in which the STA roams from the first AP to the second AP, the AC may update the forwarding entry corresponding to the STA in time. This helps reduce a packet loss amount of data sent by the AC to the STA.

## Description

This application claims priority to Chinese Patent Application No. 202311245888.0, filed with the China National Intellectual Property Administration on September 22, 2023 and entitled "COMMUNICATION METHOD, DEVICE, SYSTEM, AND READABLE STORAGE MEDIUM", which is incorporated herein by reference in its entirety.

### TECHNICAL FIELD

This application relates to the field of wireless communication technologies, and in particular, to a communication method, a device, a system, and a readable storage medium.

### BACKGROUND

To improve quality of communication performed by a station (station, STA) through a wireless network (for example, a wireless local area network (wireless local area network, WLAN) or a wireless fidelity (wireless fidelity, Wi-Fi) network), one access controller (access controller, AC) is usually connected to a plurality of wireless access points (access points, APs). The STA may roam, based on an environment in which the STA is located, network quality of different APs, and the like, between the plurality of APs connected to the AC, to improve communication quality of accessing, by the STA through the AC, the Internet or another device connected to the AC. For example, after the STA is connected to the current AP to perform network data transmission, if the STA moves to an area closer to another AP or network quality of the another AP is better than that of the current AP, the STA may be connected to the another AP for communication.

Generally, data transmitted by the Internet or the another device connected to the AC to the STA is transmitted, based on a forwarding entry (used to record a correspondence between the STA and a port of the AC) of the STA in a forwarding table of the AC, by the AC to an AP connected to the port corresponding to the STA, and then transmitted by the AP to the STA through a wireless network. After the STA roams from one AP to another AP, the AC does not actively update the forwarding entry corresponding to the STA. As a result, the AC forwards the data transmitted to the STA to the one AP, causing data packet loss of the STA.

### SUMMARY

In view of this, this application provides a communication method, a device, a system, and a readable storage medium, to help reduce a data packet loss rate of a station and avoid network communication freezing of the station.

According to a first aspect, a communication method is provided, where the method includes: A first device is connected to a second device, where the second device serves as a station to access a wireless access point provided by the first device, and an access controller of the first device is a third device. The first device detects that a wireless communication connection between the first device and the second device is disconnected, and sends first information to the third device, where the first information indicates the third device to delete a forwarding entry corresponding to the second device from a forwarding table of the third device.

Based on the foregoing method, after the wireless communication connection between the second device (used as a STA) and the first device (used as an AP) is disconnected, the third device (used as an AC) may delete, in time manner, the forwarding entry corresponding to the second device from the forwarding table. According to a stipulation of a communication protocol, when there is no forwarding entry of the second device, the third device may buffer data transmitted to the second device, and transmit the buffered data to the third device after the second device is reconnected to a wireless access point of the third device. This helps reduce a packet loss rate of the second device, and avoids network communication freezing of the second device.

In some implementations, the first device is a wireless access point connected to the third device, and is configured to provide, for the second device, a wireless network connected to a network (for example, the Internet) connected to the third device or connected to another device connected to the third device.

In a possible implementation of the first aspect, that the first device detects that a wireless communication connection between the first device and the second device is disconnected, and sends first information to the third device includes: The first device detects that the wireless communication connection between the first device and the second device is disconnected, and sends the first information to the third device through a management channel between the first device and the third device.

In some implementations, the management channel between the first device and the third device may be a communication channel used to transmit control information between the third device and the first device, or a packet (or a frame) that is defined in a communication protocol between the third device and the first device and that is used to transmit control information.

In a possible implementation of the first aspect, the first information includes an identifier of the second device, and the identifier includes at least one of a media access control address, a device serial number, a device name, and an Internet protocol address.

According to a second aspect, a communication method is provided, where the method includes: A third device receives first information sent by a first device, where the first information is sent when the first device detects that a wireless communication connection between the first device and a second device is disconnected, the third device is an access controller of the first device, and the second device serves as a station to access a wireless access point provided by the first device; and the third device deletes, in response to the first information, a forwarding entry corresponding to the second device from a forwarding table.

Based on the foregoing method, after receiving the first information indicating that the wireless communication connection between the second device (used as a STA) and the first device (used as an AP) is disconnected, the third device (used as an AC) may delete, in time, the forwarding entry corresponding to the second device from the forwarding table. According to a stipulation of a communication protocol, when there is no forwarding entry of the second device, the third device may buffer data transmitted to the second device, and transmit the buffered data to the third device after the second device is reconnected to a wireless access point of the third device. This helps reduce a packet loss rate of the second device, and avoids network communication freezing of the second device.

In some implementations, the first device is a wireless access point connected to the third device, and is configured to provide, for the second device, a wireless network connected to a network (for example, the Internet) connected to the third device or connected to another device connected to the third device.

In a possible implementation of the second aspect, the method further includes: After deleting the forwarding entry corresponding to the second device, the third device sends an address resolution protocol request packet for an Internet protocol address of the second device; and the third device receives an address resolution protocol response packet that is sent by the second device and that corresponds to the address resolution protocol request packet, and creates, in the forwarding table, a first forwarding entry corresponding to the second device, where a forwarding port in the first forwarding entry is a communication port between the wireless access point currently connected to the second device and the third device.

In this implementation, after deleting the forwarding entry corresponding to the second device, the third device may establish, in time by sending the address resolution protocol request packet for the Internet protocol address of the second device, the first forwarding entry corresponding to the second device. This can shorten time during which a communication connection between the third device and the second device is disconnected, and avoid network freezing of the second device.

In a possible implementation of the second aspect, the method further includes: The third device receives a first packet, where a sending device recorded in the first packet is the second device; and the third device creates, in the forwarding table, a first forwarding entry corresponding to the second device, where a forwarding port in the first forwarding entry is a communication port between the wireless network access point currently connected to the second device and the third device.

In a possible implementation of the second aspect, the method further includes: The third device buffers first data corresponding to the second device after deleting the forwarding entry corresponding to the second device; and the third device transmits the first data to the second device based on the first forwarding entry.

In this implementation, after creating the first forwarding entry for the second device, the third device may transmit the buffered data corresponding to the second device to the second device, to reduce a data volume of packet loss of the second device.

According to a third aspect, a communication method is provided. The method includes: A fourth device establishes a wireless communication connection to a second device, where the second device serves as a station to access a wireless access point provided by the fourth device, an access controller of the fourth device is a third device, and the fourth device communicates with the third device through a first port; and the fourth device sends a second packet to the third device, where the second packet indicates the third device to update a forwarding port in a forwarding entry that is in a forwarding table of the third device and that corresponds to the second device to the first port, and a media access control address recorded in a source address field of the second packet is a media access control address of the second device.

According to the foregoing method, when the second device (used as a STA) establishes the wireless communication connection between the second device and the fourth device, the fourth device (used as an AP) may send, to the third device (used as an AC), the second packet in which the media access control address recorded in the source address field is the media access control address of the second device. In this way, the third device updates, in time, the forwarding entry corresponding to the second device. In the foregoing manner, a packet loss rate of the second device can be reduced, and network communication stalling of the second device can be avoided.

In some implementations, the fourth device is a wireless access point connected to the third device, and is configured to provide, for the second device, a wireless network used to connect to a network (for example, the Internet) connected to the third device or connect another device connected to the third device.

In a possible implementation of the third aspect, the second packet is any one of the following packets: an address resolution protocol packet, a spanning tree protocol packet, and an Internet control message protocol packet whose destination device is the third device.

According to a fourth aspect, a first device is provided. The first device includes: a memory, configured to store one or more programs; and a processor, configured to execute the one or more programs, so that the first device implements any communication method provided in the first aspect.

According to a fifth aspect, this application provides a third device. The third device includes: a memory, configured to store one or more programs; and a processor, configured to execute the one or more programs, so that the third device implements any communication method provided in the second aspect.

According to a sixth aspect, this application provides a fourth device. The fourth device includes: a memory, configured to store one or more programs; and a processor, configured to execute the one or more programs, so that the fourth device implements any communication method provided in the third aspect.

According to a seventh aspect, a system is provided. The system includes any first device provided in the fourth aspect and any third device provided in the fifth aspect.

According to an eighth aspect, a readable storage medium is provided. The readable storage medium includes one or more programs. When the one or more programs are executed on a device, the device performs any communication method provided in the first aspect or implements any communication method provided in the second aspect, or implement any communication method provided in the third aspect.

According to a ninth aspect, a program product is provided. When the program product runs on a device, the device implements any communication method provided in the first aspect, or implements any communication method provided in the second aspect, or implement any communication method provided in the third aspect.

It should be understood that, for beneficial effects of the fourth aspect to the ninth aspect, refer to descriptions of the first aspect to the third aspect. Details are not described herein again.

### BRIEF DESCRIPTION OF DRAWINGS

FIG. 1 is a diagram of a roaming scenario according to some embodiments of this application;
FIG. 2 is a diagram of a time sequence in which an AC 10 forwards data in the scenario shown in FIG. 1 according to some embodiments of this application;
FIG. 3 is a diagram of a process of a communication method according to some embodiments of this application;
FIG. 4A is a diagram of a time sequence in which an AC 10 forwards data to a STA30 after updating a forwarding table based on a forwarding table deletion message sent by an AP 21 according to some embodiments of this application;
FIG. 4B is a diagram of a time sequence in which an AC 10 forwards data to a STA 30 after updating a forwarding entry based on an uplink packet sent by an AP 22 according to some embodiments of this application;
FIG. 5A is a diagram of a connection manner between an AP 21, an AP 22, and an AC 10 according to some embodiments of this application;
FIG. 5B is a diagram of another connection manner between an AP 21, an AP 22, and an AC 10 according to some embodiments of this application;
FIG. 5C is a diagram of still another connection manner between an AP 21, an AP 22, and an AC 10 according to some embodiments of this application;
FIG. 5D is a diagram of yet another connection manner between an AP 21, an AP 22, and an AC 10 according to some embodiments of this application;
FIG. 6 is a diagram of software architectures of an AC and an AP according to some embodiments of this application;
FIG. 7A is a diagram of a function of a station connection status detection module according to some embodiments of this application;
FIG. 7B is a diagram of a function of a forwarding entry update information sending module according to some embodiments of this application;
FIG. 7C is a diagram of a function of a roaming detection module according to some embodiments of this application;
FIG. 7D is a diagram of a function of a forwarding entry processing module according to some embodiments of this application;
FIG. 8A is a diagram of an implementation process of a communication method according to some embodiments of this application;
FIG. 8B is a schematic flowchart of an interaction of a communication method according to some embodiments of this application;
FIG. 9 is a schematic flowchart of an interaction of another communication method according to some embodiments of this application;
FIG. 10A is a diagram of an implementation process of another communication method according to some embodiments of this application;
FIG. 10B is a schematic flowchart of an interaction of still another communication method according to some embodiments of this application;
FIG. 11 is a schematic flowchart of an interaction of yet another communication method according to some embodiments of this application; and
FIG. 12 is a diagram of a structure of a device 100 according to some embodiments of this application.

### DESCRIPTION OF EMBODIMENTS

Illustrative embodiments of this application include but are not limited to a communication method, a device, a system, and a readable storage medium.

The following describes technical solutions in this application with reference to the accompanying drawings.

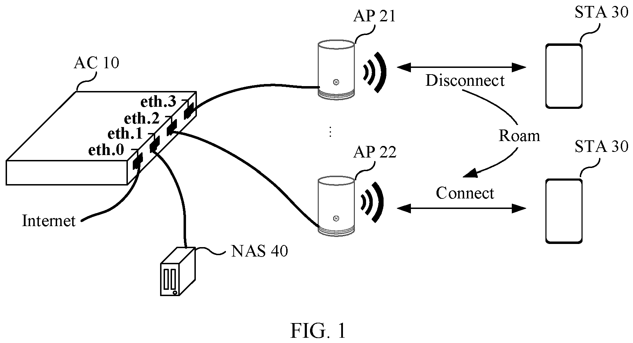

FIG. 1 is a diagram of a roaming scenario according to some embodiments of this application.

As shown in FIG. 1, an AC 10 includes an Ethernet (Ethernet) interface eth.0, an Ethernet interface eth.1, an Ethernet interface eth.2, and an Ethernet interface eth.3. The Ethernet interface eth.0 is connected to the Internet (Internet), the Ethernet interface eth.1 is connected to a network attached storage (network attached storage, NAS) 40, the Ethernet interface eth.2 is connected to an AP 22, and the Ethernet interface eth.3 is connected to an AP 21.

Refer to FIG. 1. A STA 30 is connected to the AP 21 through a wireless network, and performs network data transmission through the AP 21. For example, the STA 30 may access the Internet or another device (for example, the NAS 40) connected to an AC 10 through the AP 21 and the AC 10. When the STA 30 moves to an area closer to the AP 22 or network quality provided by the AP 22 is higher than that provided by the AP 21, the STA may roam to the AP 22 (disconnecting a wireless network connection with the AP 21, and connecting to the AP 22 through a wireless network) according to a roaming protocol (for example, the Institute of Electrical and Electronics Engineers (institute of electrical and electronics engineers, IEEE) 802.11K protocol, the IEEE 802.11V protocol, or the IEEE 802.11R protocol), and perform network data transmission through the AP 22.

However, data transmitted by the Internet or the NAS 40 to the STA is transmitted by the AC 10 to the AP 21 or the AP 22 based on a forwarding entry (used to record a correspondence between the STA 30 and an AP) of the STA 30. After the STA 30 roams from the AP 21 to the AP 22, the forwarding entry corresponding to the STA 30 in the AC 10 is not updated immediately. For example, when the STA 30 communicates with the AC 10 through the transmission control protocol (transmission control protocol, TCP), the AC 10 updates the forwarding entry of the STA 30 after a communication connection between the AC 10 and the STA 30 is disconnected for preset duration. When the STA 30 communicates with the AC 10 through a user datagram protocol (user datagram protocol, UDP), the AC 10 updates a forwarding entry of the STA 30 after receiving an uplink packet sent by the STA 30.

In this way, because the AC 10 does not actively update the forwarding entry corresponding to the STA 30 in the forwarding table, the AC 10 forwards, to the AP 21 through the Ethernet interface eth.3, the data transmitted by the Internet or the NAS 40 to the STA 30. However, actually, the STA 30 has roamed to the AP 22, and the AP 21 cannot correctly transmit the data to the STA 30.

It should be understood that a forwarding table of an AC records a correspondence between a STA identifier (for example, a media access control (media access control, MAC) address, a device name, a device serial number, or an Internet protocol (internet protocol, IP) address) of each STA connected to the AC and a port of the AC (which may be a physical interface (for example, the foregoing Ethernet interface) of the AC, or may be a logical port for wireless communication). The correspondence between the STA identifier of each STA and the port of the AC may be referred to as a forwarding entry.

In some other embodiments, the forwarding table of the AC may further record other information, for example, whether the MAC address is a local address of the AC, and aging time of the forwarding entry (time for automatically refreshing the forwarding entry), the STA identifier of each STA and IP four-tuple information (a source IP address, a destination IP address, a source port, and a destination port) or quintuple information (a source IP address, a destination IP address, a protocol number, a source port, and a destination port), or seven-tuple information (a source IP address, a destination IP address, a protocol number, a source port, a destination port, a service type, and an interface index).

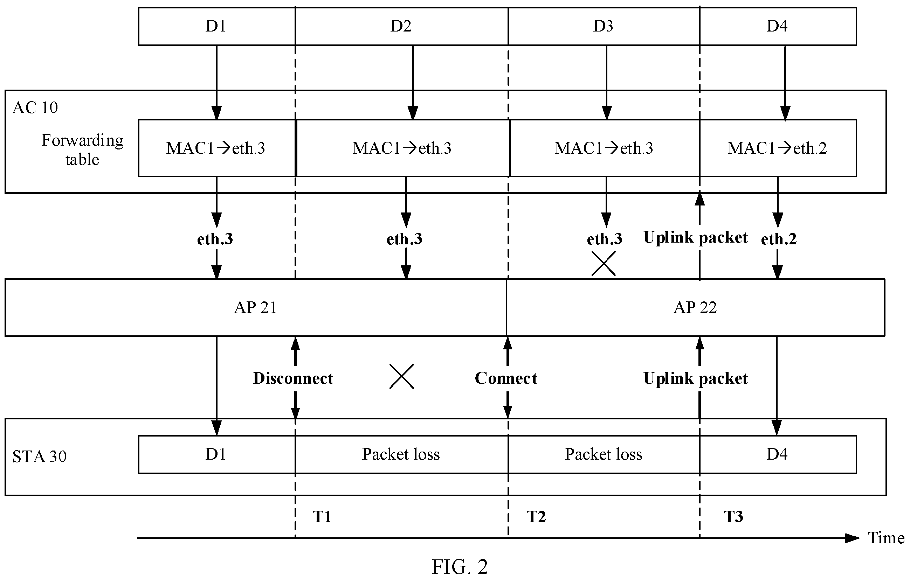

FIG. 2 is a diagram of a time sequence in which an AC 10 forwards data in the scenario shown in FIG. 1 according to some embodiments of this application.

As shown in FIG. 2, the data that needs to be transmitted by the Internet or the NAS 40 to the STA 30 includes data D1, data D2, data D3, and data D4, and a MAC address of the STA 30 is MAC1.

Before a moment T1, the STA 30 is connected to the AP 21, and the forwarding entry corresponding to the STA 30 in the forwarding table of the AC 10 is "MAC1→eth.3" (a correspondence between the MAC address of the STA 30 and the Ethernet interface eth.3). The AC 10 may transmit, based on the forwarding entry "MAC1→eth.3", the data D1 to the AP 21 connected to the Ethernet interface eth.3, and then the AP 21 transmits the data D1 to the STA 30 through a wireless network.

At a moment T1, the STA 30 disconnects the wireless network connection with the AP 21, and is connected to the AP 22 at a moment T2 through the wireless network.

In a period from the moment T1 to the moment T2, the AC 10 does not update the forwarding entry corresponding to the STA 30, and the AC 10 still transmits, based on the forwarding entry "MAC1→eth.3", the data D2 to the AP 21 connected to the Ethernet interface eth.3. However, in the period from the moment T1 to the moment T2, the STA 30 is not connected to the AP 21. As a result, the STA 30 cannot receive the data D2, and a packet loss occurs on the data D2.

In a period from the moment T2 to a moment T3, the STA 30 has been connected to the AP 22, but the STA 30 has not sent an uplink packet to the AC 10. Therefore, the AC 10 does not update the forwarding entry corresponding to the STA 30. In a period from the moment T2 to the moment T3, the AC 10 still transmits, based on the forwarding entry "MAC1→eth.3", the data D3 to the AP 21 connected to the Ethernet interface eth.3. However, in the period from the moment T2 to the moment T3, the STA 30 is not connected to the AP21. As a result, the STA 30 cannot receive the data D3, and a packet loss occurs on the data D3.

At the moment T3, the STA 30 sends an uplink packet to the AC 10 through the AP 22. After receiving the uplink packet sent by the STA30, the AC 10 may update the forwarding entry corresponding to the STA 30 to "MAC1→eth.2" (a correspondence between the MAC address of the STA 30 and the Ethernet interface eth.2). After the moment T3, the AC 10 may transmit, based on the forwarding entry "MAC1→eth.2", the data D4 to the AP 22 connected to the Ethernet interface eth.2, and then the AP 22 transmits the data D4 to the STA 30 through the wireless network.

It can be learned from the foregoing process that, in a period from the moment at which the STA 30 is disconnected from the AP 21 to the moment at which the STA 30 sends the uplink packet to the AP 22, data (data D2 and data D3) that needs to be transmitted by the Internet or the NAS 40 to the STA 30 cannot be transmitted to the STA 30, and consequently, a data packet loss occurs on the STA 30.

In view of this, embodiments of this application provide a communication method, applied to a scenario in which a STA roams from a first AP to a second AP, and the first AP and the second AP are connected to a same AC. The first AP sends forwarding entry update information to the AC when detecting that a wireless network connection between the STA and the first AP is disconnected, and/or the second AP sends the forwarding entry update information to the AC after detecting that a wireless communication connection between the second AP and the STA is established. Then, the AC may update, based on the received forwarding entry update information, a historical forwarding entry (corresponding to a mapping relationship between a port connected to the first AP on the AC and a STA identifier of the STA) corresponding to the STA in a forwarding table of the AC to a current forwarding entry (corresponding to a mapping relationship between a port connected to the second AP on the AC and the STA identifier of the STA). In this way, in the scenario in which the STA roams from the first AP to the second AP, the AC may update the forwarding entry corresponding to the STA in time. This helps reduce a packet loss amount of data sent by the AC to the STA.

In some embodiments, in the scenario in which the STA roams from the first AP to the second AP, and the first AP and the second AP are connected to the same AC, when the first AP detects that the wireless network connection between the STA and the first AP is disconnected, the first AP may send forwarding entry deletion information (used as forwarding table update information) carrying the STA identifier of the STA (for example, a MAC address, a name, and a device serial number of the STA device) to the AC. After receiving the forwarding entry deletion information, the AC may delete, based on the STA identifier in the forwarding entry deletion information, the forwarding entry corresponding to the STA from the forwarding table of the AC.

After the AC deletes the forwarding entry of the STA, the AC may buffer the data transmitted to the STA. Then, after the STA is connected to the second AP, the AC may create, in the forwarding table of the AC, the forwarding entry that corresponds to the STA and that indicates a correspondence between the port connected to the second AP on the AC and the STA identifier of the STA. Then, the AC may transmit, to the STA based on the created forwarding entry through the second AP, the data that is previously buffered and data that currently needs to be transmitted to the STA. This helps reduce a packet loss amount of data sent by the AC to the STA in the roaming scenario of the STA.

In some embodiments, in the scenario in which the STA roams from the first AP to the second AP, and the first AP and the second AP are connected to the same AC, when detecting that the STA is connected to the second AP through a wireless network, the second AP may send an uplink packet corresponding to the STA (a packet in which a packet sending device recorded in the packet is the STA) to the AC. After receiving the uplink packet corresponding to the STA, the AC may update the historical forwarding entry (corresponding to the mapping relationship between the port connected to the first AP on the AC and the STA identifier of the STA) in the forwarding table of the AC to the current forwarding entry (corresponding to the mapping relationship between the port connected to the second AP on the AC and the STA identifier of the STA) based on the STA identifier. Then, the AC may transmit data to the STA based on the current forwarding entry through the second AP.

In this way, after the STA roams from the first AP to the second AP, the AC may update the forwarding entry corresponding to the STA in time, and transmit data to the STA based on the updated forwarding entry. This can avoid a data packet loss of the STA device caused by untimely update of the forwarding entry corresponding to the STA.

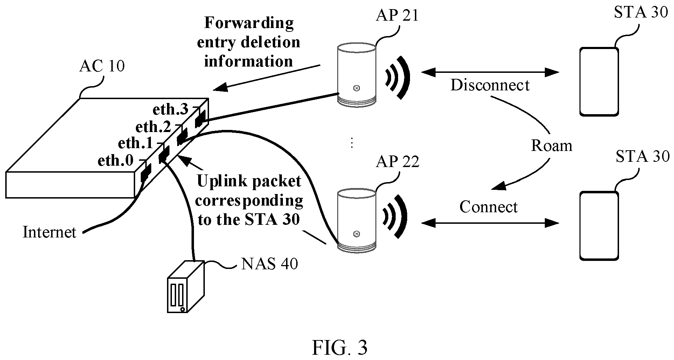

For example, FIG. 3 is a diagram of a process of a communication method according to some embodiments of this application.

Refer to FIG. 3. In the scenario shown in FIG. 1, after detecting that the wireless network between the STA 30 and the AP 21 is disconnected, the AP 21 (used as the first AP) may send forwarding entry deletion information to the AC 10. After receiving the forwarding entry deletion information, the AC 10 may delete, from the forwarding table, the forwarding entry (for example, the forwarding entry "MAC1→eth.3") corresponding to the STA 30. Then, after the STA 30 is connected to the AP 22 (used as the second AP), the AC may create the forwarding entry corresponding to the STA 30 (for example, create the forwarding entry "MAC1→eth.2"), and transmit data to the STA 30 through the AP 22 based on the created forwarding entry.

It should be understood that, after the forwarding entry corresponding to the STA 30 is deleted from the forwarding table of the AC 10, the AC 10 cannot find, from the forwarding table, an Ethernet interface corresponding to the STA 30. The AC 10 may buffer data to be transmitted to the STA 30, and after creating the forwarding entry for the STA 30, transmit the buffered data to the STA 30 through the AP 22 based on the created forwarding entry. In this way, a packet loss amount of the data sent by the AC 10 to the STA 30 can be reduced, and network freezing of the STA 30 can be avoided.

Still refer to FIG. 3. In the scenario shown in FIG. 1, after detecting the wireless network connection between the STA 30 and the AP 22, the AP 22 may send the uplink packet corresponding to the STA 30 (a packet in which a packet sending device recorded in the packet is the STA 30) (for example, an address (a MAC address of the packet sending device) in a source address field in the uplink packet is the MAC address of the STA 30) to the AC 10. After receiving the uplink packet corresponding to the STA 30, the AC 10 may update the forwarding port (for example, the Ethernet interface eth.3) in the forwarding entry corresponding to the STA 30 in the forwarding table to the port (for example, the Ethernet interface eth.2) connected to the AP 22 on the AC 10, and transmit data to the STA 30 through the AP 22 based on the updated forwarding entry.

Based on the foregoing method, when an AP connected to the STA 30 changes, the AC 10 may update the forwarding table of the STA 30 in time, and transmit data to the STA 30 based on an updated forwarding table. This helps reduce a packet loss amount of data sent by the AC 10 to the STA 30, and avoid network freezing.

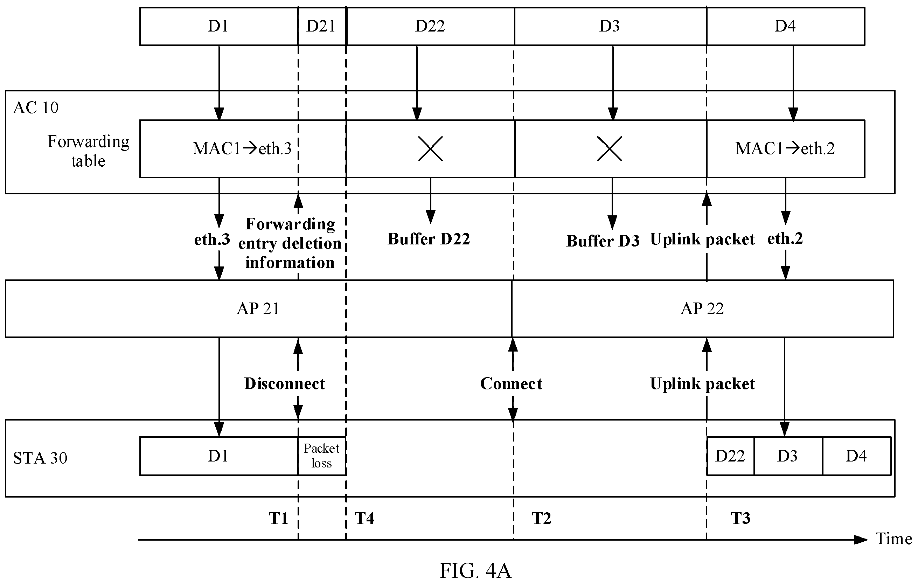

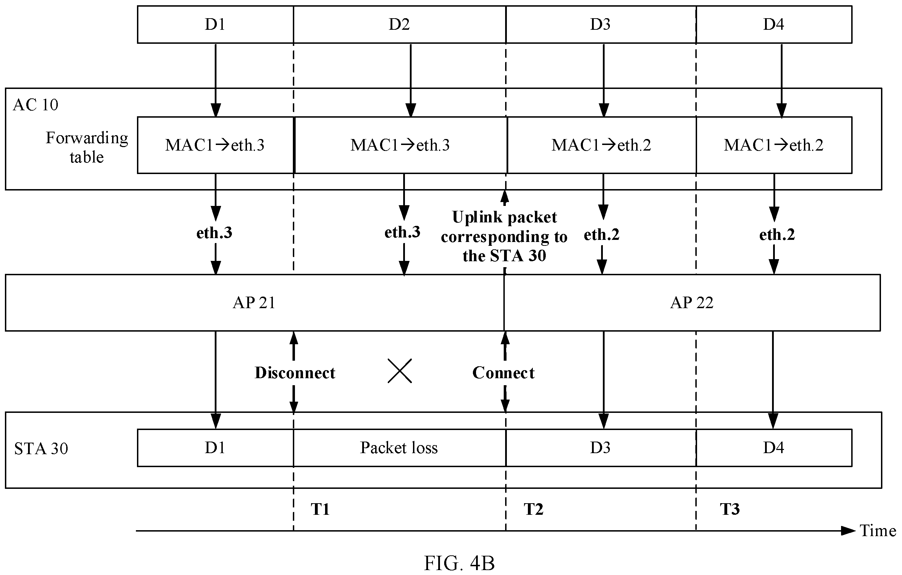

For example, FIG. 4A is a diagram of a time sequence in which the AC 10 forwards the data to the STA 30 after updating the forwarding table based on a forwarding table deletion message sent by the AP 21 according to some embodiments of this application. FIG. 4B is a diagram of a time sequence in which the AC 10 forwards the data to the STA 30 after updating the forwarding entry based on an uplink packet sent by the AP 22 according to some embodiments of this application.

Refer to FIG. 4A. In the case shown in FIG. 3, the data that needs to be transmitted by the Internet or the NAS 40 to the STA 30 includes the data D1, the data D2 (including data D21 and data D22), the data D3, and the data D4, and the MAC address of the STA 30 is the MAC1.

Before the moment T1, the STA 30 is connected to the AP 21, and the forwarding entry corresponding to the STA 30 in the forwarding table of the AC 10 is "MAC1→eth.3". The AC 10 may transmit, based on the forwarding entry "MAC1→eth.3", the data D1 to the AP 21 connected to the Ethernet interface eth.3, and then the AP 21 transmits the data D1 to the STA 30 through the wireless network.

At the moment T1, the AP 21 detects that the wireless network connection between the STA 30 and the AP 21 is disconnected, and sends the forwarding entry deletion information to the AC 10. In response to the forwarding entry deletion information, the AC 10 deletes the forwarding entry "MAC1→eth.3" corresponding to the STA 30 from the forwarding table of the AC 10 at the moment T4. The STA 30 is connected to the AP 22 at the moment T2 through the wireless network, and sends the uplink packet to the AC 10 at the moment T3.

In a period from the moment T1 to the moment T4, the forwarding entry corresponding to the STA 30 in the AC 10 is not updated, and the AC 10 still transmits, based on the forwarding entry "MAC1→eth.3", the data D21 to the AP 21 connected to the Ethernet interface eth.3.

In a period from the moment T4 to the moment T2, the forwarding entry "MAC1→eth.3" is deleted, and the AC 10 cannot find, in the forwarding table, the forwarding entry corresponding to the STA 30, and buffers the data D22.

In a period from the moment T2 to the moment T3, the STA 30 has been connected to the AP 22, but the STA 30 has not sent the uplink packet to the AC 10. Therefore, the AC 10 does not update the forwarding entry corresponding to the STA 30. In the period from the moment T2 to the moment T3, the AC 10 still cannot find, in the forwarding table, the forwarding entry corresponding to the STA 30, and buffers the data D3.

At the moment T3, the STA 30 sends the uplink packet to the AC 10 through the AP 22. After receiving the uplink packet sent by the STA 30, the AC 10 may create the forwarding entry "MAC1→eth.2" corresponding to the STA 30 in the forwarding table of the AC 10. After the moment T3, the AC 10 may transmit, based on the forwarding entry "MAC1→eth.2", the buffered data D22, the buffered data D3, and the data D4 to the AP 22 connected to the Ethernet interface eth.2, and then the AP 22 transmits the data D22, the data D3, and the data D4 to the STA 30 through the wireless network.

Based on the foregoing process, in the process in which the STA 30 roams from the AP 21 to the AP 22, a packet loss occurs only on the data D21. In comparison with the case shown in FIG. 2, no packet loss occurs on the data D22 and the data D3, and a packet loss amount of the data sent by the AC 10 to the STA 30 is reduced, avoiding communication freezing of the STA 30.

For another example, refer to FIG. 4B. In the case shown in FIG. 3, the data that needs to be transmitted by the Internet or the NAS 40 to the STA 30 includes the data D1, the data D2, the data D3, and the data D4, and the MAC address of the STA 30 is the MAC1.

Before the moment T1, the STA 30 is connected to the AP 21, and the forwarding entry corresponding to the STA 30 in the forwarding table of the AC 10 is "MAC1→eth.3". The AC 10 may transmit, based on the forwarding entry "MAC1→eth.3", the data D1 to the AP 21 connected to the Ethernet interface eth.3, and then the AP 21 transmits the data D1 to the STA 30 through the wireless network.

At the moment T1, the STA 30 disconnects the wireless network connection to the AP 21, and is connected to the AP 22 at the moment T2 through the wireless network.

In a period from the moment T1 to the moment T2, the AC 10 does not update the forwarding entry corresponding to the STA 30, and the AC 10 still transmits, based on the forwarding entry "MAC1→eth.3", the data D2 to the AP 21 connected to the Ethernet interface eth.3. However, in the period from the moment T1 to the moment T2, the STA 30 is not connected to the AP 21. As a result, a packet loss occurs on the data D2.

At the moment T2, the AP 22 detects that the STA 30 is connected to the AP 22 through the wireless network, and sends the uplink packet corresponding to the STA 30 to the AC 10. In response to the uplink packet corresponding to the STA 30, the AC 10 updates the forwarding entry corresponding to the STA 30 from "MAC1→eth.3" to "MAC1→eth.2".

In a period from the moment T2 to the moment T3, the AC 10 may transmit, based on the forwarding entry "MAC1→eth.2", the data D3 to the AP 22 connected to the Ethernet interface eth.2, and the AP 22 transmits the data D3 to the STA 30 through the wireless network.

After the moment T3, because the forwarding entry corresponding to the STA 30 has been updated to "MAC1→eth.2", the AC 10 may transmit, based on the forwarding entry "MAC1→eth.2", the data D4 to the AP 22 connected to the Ethernet interface eth.2, and then the AP 22 transmits the data D4 to the STA 30 through the wireless network.

Based on the foregoing process, in the process in which the STA 30 roams from the AP 21 to the AP 22, a packet loss occurs only on the data D2. In comparison with the case shown in FIG. 2, no packet loss occurs on the data D3, and a packet loss amount of the data sent by the AC 10 to the STA 30 is reduced, avoiding communication freezing of the STA 30.

It should be understood that the AP may be any device configured to connect the STA to a network of the AC, and includes but is not limited to a wireless router, customer premises equipment (customer premises equipment, CPE), a mobile phone, a tablet computer, a laptop computer, a desktop computer, a wearable device, and the like.

It should be understood that the AC may be any device configured to manage an AP and the STA connected to the AC, including but not limited to a router, CPE, a head unit, a mobile phone, a tablet computer, a laptop computer, a desktop computer, and the like.

In some embodiments, the AC may be configured to aggregate data of different APs and access the Internet or another device, configured to configure and manage the APs, and configured to perform control functions such as authentication, management, broadband access, and security on the STA.

It should be understood that the STA may be any device that can be connected to the AP through a wireless network, including but not limited to a laptop computer, a desktop computer, a mobile phone, a tablet computer, and a smart home device (for example, a smart television, a smart lamp, a smart curtain, or a smart camera), an Internet of things device (for example, a sensor), a wearable device (for example, a smartwatch or a smart band), and the like.

It should be understood that the AP 21, the AP 22, and the AC 10 that are provided in the foregoing embodiments are connected through Ethernet interfaces are merely an example. In some other embodiments, the AP 21, the AP 22, and the AC 10 may alternatively be connected in another manner. This is not limited herein.

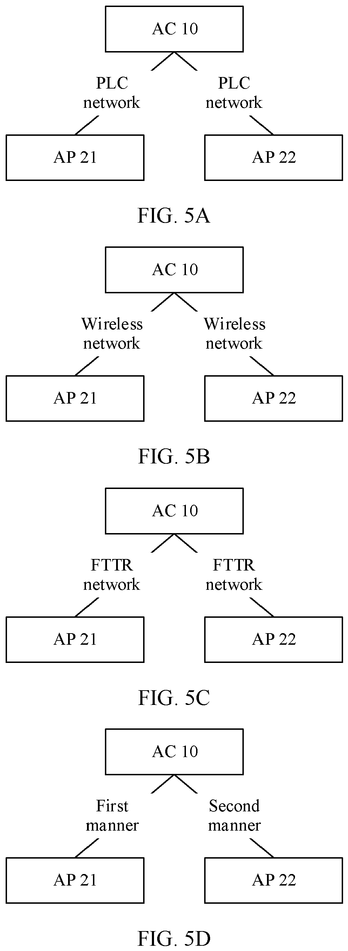

Refer to FIG. 5A. The AP 21 and the AP 22 may be connected to the AC 10 through a power line communication (power line communication, PLC) network.

Refer to FIG. 5B. The AP 21 and the AP 22 may be connected to the AC 10 through a wireless network.

Refer to FIG. 5C. The AP 21 and the AP 22 may be connected to the AC 10 through a fiber to the remote (fiber to the remote, FTTR) network.

It should be understood that, in some other embodiments, the AP 21 and the AP 22 may be connected to the AC 10 in different manners. This is not limited herein. For example, refer to FIG. 5D. The AP 21 may be connected to the AC 10 in a first manner, and the AP 22 may be connected to the AC 10 in a second manner. The first manner and the second manner may be the same or different. For example, the first manner and the second manner may be any one of the foregoing Ethernet interface, the PLC network, the FTTR network, the wireless network, and the like.

The following describes the technical solutions of this application with reference to software architectures of an AC and an AP.

For ease of understanding, software architectures of the AC and the AP are first described with reference to the case shown in FIG. 3.

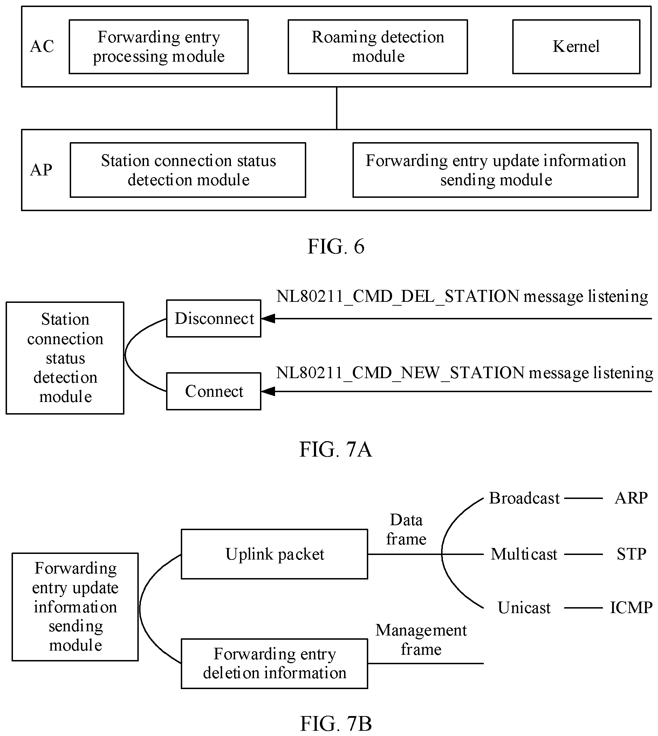

FIG. 6 is a diagram of the software architectures of the AC and the AP according to some embodiments of this application.

As shown in FIG. 6, the software architecture of the AP may include a station connection status detection module and a forwarding entry update information sending module. The software architecture of the AC includes a forwarding entry processing module, a roaming detection module, and a kernel.

The station connection status detection module is configured to detect a status of a wireless communication connection between a STA and the AP, and transmit the detected status of the wireless communication connection to the forwarding entry update information sending module.

In some embodiments, the station connection status detection module may detect the status of the wireless communication connection between the STA and the AP by monitoring a message that is defined in a communication protocol and that indicates the STA to connect to the AP through a wireless network or a message that indicates the STA to disconnect the wireless communication connection between the STA and the AP. For example, refer to FIG. 7A. The station connection status detection module may determine, when detecting an NL80211_CMD_DEL_STATION message for a STA, that a wireless communication connection between the STA and the AP is disconnected. The station connection status detection module may determine, when detecting an NL80211_CMD_NEW_STATION message for a STA, that the STA is connected to the AP through a wireless network.

The forwarding entry update information sending module is configured to send forwarding entry update information to the AC based on a detection result of the station connection status detection module.

In some embodiments, when the detection result of the station connection status detection module indicates that the wireless communication connection between the STA and the AP is disconnected, the forwarding entry update information sending module may send forwarding entry deletion information to the AC. For example, refer to FIG. 7B. The forwarding entry update information sending module may send, to the AC through a management channel, forwarding entry deletion information for deleting a forwarding entry corresponding to the STA, where the forwarding entry deletion information may include an identifier (for example, a MAC address) of the STA.

It should be understood that the management channel (also referred to as a control channel) is a communication channel used to transmit control information between the AC and the AP, or a packet (or a frame) that is defined in a communication protocol between the AC and the AP and that is used to transmit control information. For example, in some implementations, when the AC and the AP communicate with each other through the wireless access point control (controlling and provisioning of wireless access points, CAPWAP) protocol, the management channel may be a communication channel whose port number is 5247 and that is defined in the CAPWAP protocol. For another example, when the AC and the AP communicate with each other through a wireless network, the management channel may be a management frame defined in the 802.11 protocol.

In some other embodiments, the forwarding entry update information sending module may alternatively send the forwarding entry deletion information to the AC in another manner (for example, a control frame). This is not limited herein.

In some embodiments, when a detection result of the station connection status detection module indicates that a STA is connected to the AP through a wireless network, the forwarding entry update information sending module may send an uplink packet corresponding to the STA (a packet in which a packet sending device recorded in the packet is the STA) to the AC. For example, refer to FIG. 7B. The forwarding entry update information sending module may send the uplink packet corresponding to the STA to the AC in a broadcast manner (for example, broadcast an address resolution protocol (address resolution protocol, ARP) packet), a multicast manner (for example, multicast a spanning tree protocol (spanning tree protocol, STP) packet), a unicast manner (for example, sending an Internet control message protocol (internet control message protocol, ICMP) packet that uses the AC as a destination device), or the like.

In some embodiments, the forwarding entry update information sending module may send the uplink packet of the corresponding STA to the AC through a data channel.

It should be understood that the data channel is a channel used to transmit data between the AC and the AP, or a packet (or a frame) that is defined in a communication protocol between the AC and the AP and that is used to transmit data. For example, in some embodiments, when the AC and the AP communicate with each other through the CAPWAP protocol, the management channel may be a communication channel whose port number is 5246 and that is defined in the CAPWAP protocol. For another example, the AC and the AP communicate with each other through a wireless network, and the data channel may be a data frame (or a packet) defined in the 802.11 protocol.

In some other embodiments, the forwarding entry update information sending module may also send the uplink packet corresponding to the STA to the AC in another manner. This is not limited herein.

The roaming detection module is configured to: detect whether the STA connected to the AP is connected to the AP in a roaming manner, and send a detection result to the forwarding entry processing module.

In some embodiments, the roaming detection module may buffer a mapping relationship between a STA connected to the AC within preset duration and a forwarding port of the STA. After receiving an uplink packet of a STA, the roaming detection module may determine that the STA is connected to the AP in a roaming manner in a case in which a port connected to the AP currently connected to the STA on the AC is different from a forwarding port in a previous connection of the STA.

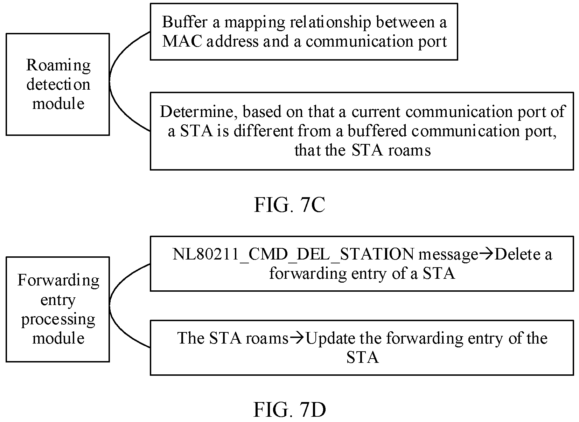

For example, refer to FIG. 7C. The roaming detection module may buffer a mapping relationship between a MAC address of the STA that is historically connected to the AC within the preset duration and the forwarding port of the STA. After receiving the uplink packet corresponding to the STA, the roaming detection module may determine, from the cached mapping relationship based on the MAC address of the STA, the forwarding port in the previous connection of the STA, and determine that the STA is connected to the AP in a roaming manner when the port connected to the AP currently connected to the STA on the AC is different from the forwarding port in the last connection.

The forwarding entry processing module is configured to delete or update, based on the forwarding entry deletion information sent by the forwarding entry update information sending module or the detection result of the roaming detection module, the forwarding entry corresponding to the STA in a forwarding table.

In some embodiments, refer to FIG. 7D. When receiving forwarding entry deletion information for a STA (for example, when receiving the forwarding entry deletion information sent by the AP that detects an NL80211_CMD_DEL_STATION message corresponding to the STA), the forwarding entry processing module may delete a forwarding entry corresponding to the STA in the forwarding table of the AC.

In some embodiments, refer to FIG. 7D. When the roaming detection module detects that a STA is connected to the AP in a roaming manner, the forwarding entry processing module may update a forwarding port in a forwarding entry corresponding to the STA in the forwarding table of the AC to a port connected to an AP currently connected to the STA.

The kernel is configured to implement AC-related functions, for example, a function of aggregating data from different APs and access the Internet, AP configuration management, wireless user authentication and management, bandwidth, access, switching, and security.

In some embodiments, the kernel may be used to send an ARP request packet to the STA based on a rule defined in a communication protocol (for example, when there is data that needs to be forwarded to the STA and there is no forwarding entry of the STA in the forwarding table), and create a forwarding entry corresponding to the STA based on a received APR response packet. In some embodiments, the kernel may be used to: when there is data that needs to be forwarded to the STA in the AC and there is no forwarding entry of the STA in the forwarding table, buffer the data that needs to be forwarded to the STA, and transmit the buffered data to the STA after the STA is reconnected to the AC.

In some embodiments, the kernel may be used to update, based on a received uplink packet corresponding to the STA, a forwarding entry corresponding to the STA.

It should be understood that the software architectures shown in FIG. 6 is only an example. In some other embodiments, the software architectures of the AC and the AP may include more or fewer modules, or some modules may be combined or split. This is not limited herein.

It should be understood that, in some embodiments, only some modules in the software architectures shown in FIG. 6 may be disposed in the AC and the AP to implement the method provided in this embodiment of this application.

The following describes the technical solutions of this application with reference to the software architectures shown in FIG. 6 and the scenario shown in FIG. 3.

First, a technical solution in which an AP to which a STA connects before roaming triggers an AC to update a forwarding entry of the STA is described.

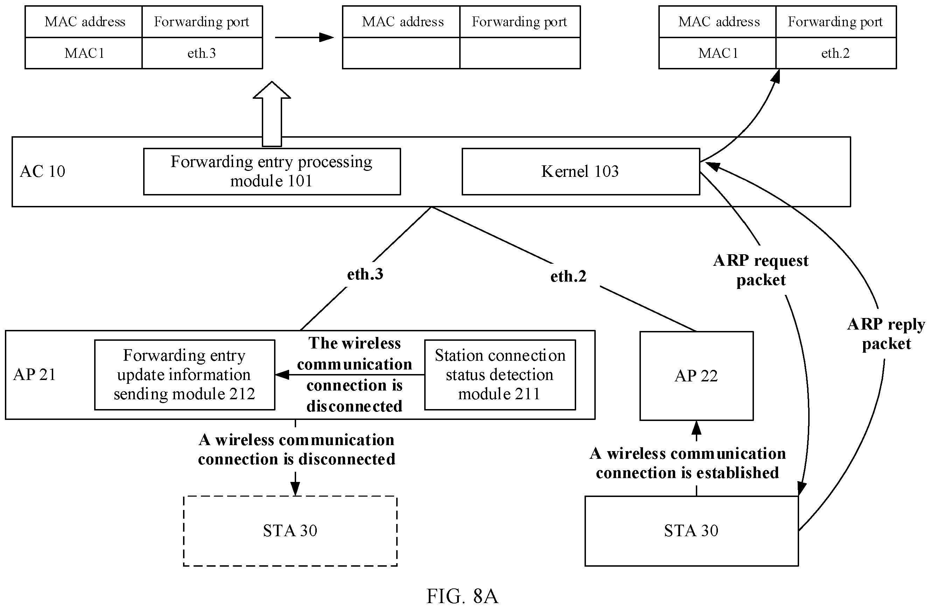

For example, FIG. 8A is a diagram of an implementation process of a communication method according to some embodiments of this application.

Refer to FIG. 8A. A forwarding entry processing module 101 and a kernel 103 are disposed in the AC 10, and a station connection status detection module 211 and a forwarding entry update information sending module 212 are disposed in the AP 21.

The STA 30 is first connected to the AP 21, and performs data transmission through the AP 21 and the AC 10 (for example, accessing the Internet through the AC 10 or accessing another device connected to the AC 10). In a case in which network quality of the AP 22 is higher than that of the AP 21, the STA 30 may disconnect a wireless communication connection to the AP 21, and roam to the AP 22.

After detecting that the wireless communication connection between the STA 30 and the AP 21 is disconnected, the station connection status detection module 211 may send a detection result to the forwarding entry update information sending module 212. The forwarding entry update information sending module 212 may send forwarding entry deletion information to the forwarding entry processing module 101 of the AC 10 in response to the detection result. After receiving the forwarding entry deletion information, the forwarding entry processing module 101 of the AC 10 may delete the forwarding entry "MAC1→eth.3" corresponding to the STA 30 in the forwarding table of the AC 10. After deleting the forwarding entry "MAC1→eth.3" corresponding to the STA 30, the AC 10 may buffer data transmitted to the STA 30, and send, through the kernel 103, an ARP request packet to an IP address corresponding to the STA 30, to obtain the forwarding port of the STA 30.

After the STA 30 roams to the AP 22, the STA 30 may send an ARP response packet to the AC 10 in response to the ARP request packet sent by the kernel 103. After receiving the ARP response packet, the forwarding entry processing module 101 of the AC 10 may create the forwarding entry "MAC1→eth.2" corresponding to the STA 30 in the forwarding table of the AC 10. Then, the AC 10 may transmit the buffered data corresponding to the STA 30 to the STA 30 through the AP 22 based on the created forwarding entry "MAC1→eth.2".

In this way, after the wireless communication connection between the STA 30 and the AP 21 is disconnected, the AC 10 may update the forwarding entry corresponding to the STA 30 in time. This helps reduce a packet loss amount of the data sent by the AC 10 to the STA 30, and avoid network freezing.

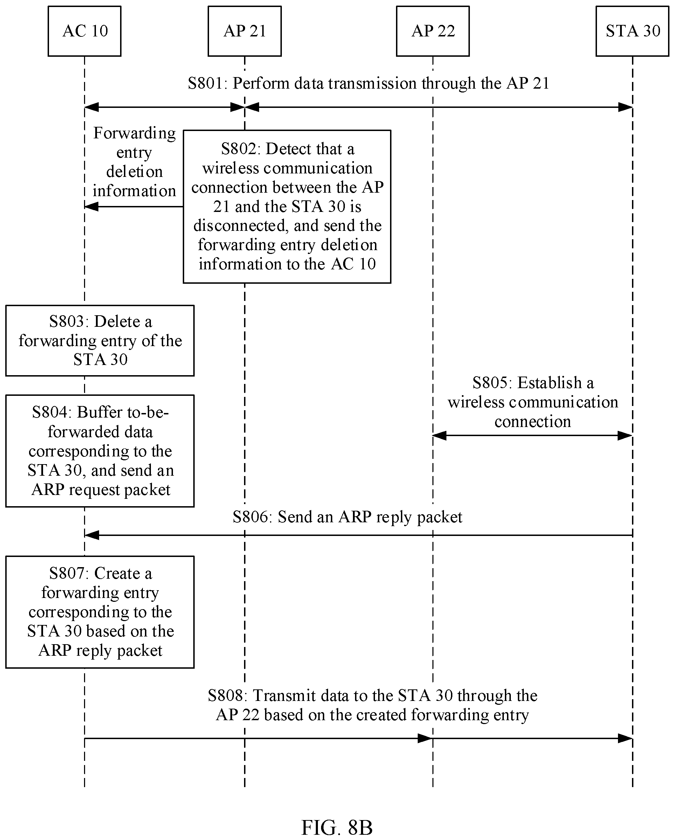

With reference to the process shown in FIG. 8A, FIG. 8B is a schematic flowchart of an interaction of a communication method according to some embodiments of this application. As shown in FIG. 8B, the communication method may include the following steps.

S801: The STA 30 performs data transmission with the AC 10 through the AP 21.

The STA 30 is connected to the AP 21 through the wireless network, and performs data transmission with the AC 10 through the AP 21.

For example, the STA 30 may access, through the AP 21, a network (for example, the Internet) connected to the AC 10, or access another device connected to the AC 10. For example, the STA 30 may download data from another device (for example, a server) in the Internet or upload data to the another device. For another example, the STA 30 may access a NAS connected to the AC 10, for example, the NAS 40, to download data from the NAS or upload data to the NAS.

It should be understood that, in a process in which the STA 30 performs data transmission with the AC 10 through the AP 21, the forwarding entry corresponding to the STA 30 in the forwarding table of the AC 10 is the forwarding entry "MAC1→eth.3". The AC 10 may transmit data to the STA 30 through the AP 21 connected to the Ethernet interface eth.3.

S802: The AP 21 detects that the wireless communication connection between the AP 21 and the STA 30 is disconnected, and sends the forwarding entry deletion information to the AC 10.

For example, the AP 21 may listen to an NL80211_CMD_DEL_STATION message based on the station connection status detection module 211, and send the forwarding entry deletion information to the AC 10 when detecting an NL80211_CMD_DEL_STATION message corresponding to the STA 30.

In some embodiments, the forwarding entry deletion information may include a STA identifier of the STA 30, for example, at least one of a MAC address, a name, or a device serial number of the STA 30.

In some embodiments, the AP 21 may embed the forwarding entry deletion information into a management frame, and send the forwarding entry deletion information to the AC 10 through the management frame.

In some embodiments, the AP 21 may detect, based on the station connection status detection module 211, that the wireless communication connection between the AP 21 and the STA 30 is disconnected, and send the forwarding entry deletion information to the AC 10 through the forwarding entry update information sending module 212.

S803: The AC 10 deletes the forwarding entry of the STA 30.

In response to the forwarding entry deletion information, the AC 10 deletes, based on the STA identifier of the STA 30, the forwarding entry corresponding to the STA 30 from the forwarding table of the AC 10.

In some embodiments, the AC 10 may delete, through the forwarding entry processing module 101, the forwarding entry corresponding to the STA 30 from the forwarding table of the AC 10.

In some embodiments, when there is a neighbor information set and a hardware acceleration information set in the AC 10, the AC 10 may also delete, from the neighbor set and the hardware acceleration set, information corresponding to the STA 30. It should be understood that the neighbor information set is an information set that is in the AC 10 and that is used to store a list of routers that have a bidirectional communication neighbor relationship with the AC 10. In some embodiments, the neighbor information set may also be referred to as a neighbor table.

It should be understood that the hardware acceleration information set is in the AC 10 and is used to store information (for example, a MAC address or an IP address) of a device that is connected to the AC 10 and that supports hardware acceleration (for example, an AP or an AC).

S804: The AC 10 buffers to-be-forwarded data corresponding to the STA 30 and sends an ARP request packet.

After deleting the forwarding entry of the STA 30 from the forwarding table of the AC 10, the AC 10 may buffer the to-be-forwarded data corresponding to the STA 30, and send the ARP request message for the STA 30.

In some embodiments, there is a lease period for an IP address allocated by the AC 10 to a STA connected to the AP 21 and the AP 22. In other words, when an interval between two times of connecting a STA to the AC 10 through the AP 21 or the AP 22 is less than the lease period, an IP address allocated by the AC 10 to the STA remains the same. Based on this, in some embodiments, the AC 10 may send an ARP request packet for an IP address used before the STA 30 disconnects the wireless communication connection to the AP 21.

In some embodiments, the ARP request packet is a packet defined in an ARP, and the ARP request packet may include an IP address (referred to as a destination IP address below) of a device that needs to respond to the ARP request packet. When the AC 10 receives data that needs to be forwarded to a STA, if there is no forwarding entry corresponding to the STA in the forwarding table, the AC 10 may send an ARP request packet for an IP address of the STA.

In some embodiments, if the AC 10 does not receive an ARP response packet corresponding to the ARP request packet within predefined duration, the AC 10 discards the ARP request packet.

In some embodiments, the AC 10 may send the ARP request packet through the kernel 103.

S805: The STA 30 establishes a wireless communication connection to the AP 22.

After disconnecting the wireless communication connection to the AP 21, the STA 30 may establish the wireless communication connection to the AP 22, to roam to the AP 22.

In some embodiments, step S805 may be performed before step S803, or may be performed in parallel with step S803 and step S804. This is not limited herein.

S806: The STA 30 sends an ARP response packet to the AC 10 through the AP 22.

After establishing the wireless communication connection to the AP 22, the STA 30 may send the ARP response packet to the AC 10 through the AP 22 when receiving the ARP request packet sent by the AC 10.

It should be understood that the ARP response packet is a packet defined in an APR. When a device receives an ARP request packet, if an IP address of the device is the same as the destination IP address in the ARP request packet, the device may send an ARP response packet to the device that sends the ARP request packet, where the ARP response packet may include a MAC address of the device.

S807: The AC 10 creates the forwarding entry corresponding to the STA 30 based on the ARP response packet.

After receiving the ARP response packet, the AC 10 may create the forwarding entry corresponding to the STA 30 based on the ARP response packet, where the forwarding port of the STA 30 in the created forwarding entry is the port (for example, the Ethernet interface eth.2) connected to the AP 22 on the AC 10.

For example, the AC 10 may obtain the MAC address (MAC1) of the STA 30 in the ARP response packet, and establish the forwarding entry "MAC1→eth.2" corresponding to the STA 30.

In some embodiments, the AC 10 may create the forwarding entry corresponding to the STA 30 based on the ARP response packet through the kernel 103.

S808: The AC 10 transmits data to the STA 30 through the AP 22 based on the created forwarding entry.

After creating the forwarding entry corresponding to the STA 30, the AC 10 may transmit data to the STA 30 through the AP 22 based on the created forwarding entry.

For example, the AC 10 may forward the buffered data corresponding to the STA 30 and other data to be transmitted to the STA 30 to the AP 22 connected to the Ethernet interface eth.2, and then the AP 22 transmits the data to the STA 30 through the wireless network.

Based on the foregoing method, in the process in which the STA 30 roams from the AP 21 to the AP 22, the AC 10 may delete, in time based on the forwarding entry deletion message sent by the AP 21, the previously stored forwarding entry corresponding to the STA 30, and create the new forwarding entry corresponding to the STA 30. In this way, the AC 10 can send the data corresponding to the STA 30 to the AP 22 in time. This helps reduce a packet loss amount of the data sent by the AC 10 to the STA 30, and avoid network freezing of the STA 30.

In the embodiments shown in FIG. 8A and FIG. 8B, the AC 10 creates the forwarding entry of the STA 30 based on the APR request message and the ARP response packet. In some other embodiments, the AC 10 may not send an ARP request packet, but creates the forwarding entry of the STA 30 after receiving the uplink packet sent by the STA 30.

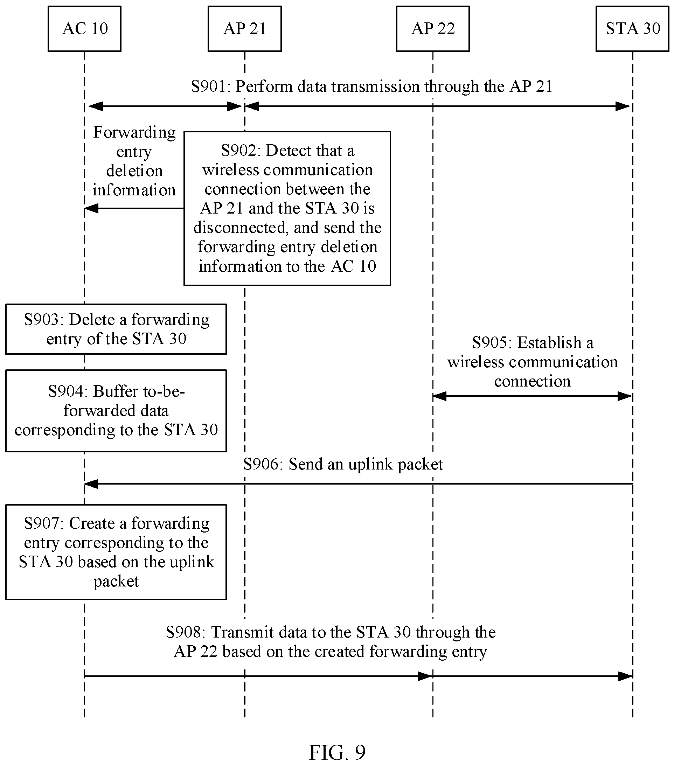

For example, FIG. 9 is a schematic flowchart of an interaction of another communication method according to some embodiments of this application. As shown in FIG. 9, the method includes step S901 to step S908. For step S901 to step S903, refer to the foregoing step S801 to step S803. Details are not described herein again. Step S904 to step S908 that are different from the embodiment shown in FIG. 8 are described below.

S904: The AC 10 buffers to-be-forwarded data corresponding to the STA 30.

After deleting the forwarding entry of the STA 30 from the forwarding table of the AC 10, the AC 10 may buffer the to-be-forwarded data corresponding to the STA 30.

S905: The STA 30 establishes the wireless communication connection to the AP 22.

After disconnecting the wireless communication connection to the AP 21, the STA 30 may establish the wireless communication connection to the AP 22, to roam to the AP 22.

In some embodiments, step S905 may be performed before step S903, or may be performed in parallel with step S903 and step S904. This is not limited herein.

S906: The STA 30 sends the uplink packet to the AC 10 through the AP 22.

After the STA 30 establishes the wireless communication connection to the AP 22, the STA 30 sends the uplink packet to the AC 10 through the AP 22 based on an uplink packet sending time point (for example, sending an uplink packet at an interval of a time length) that is set by an application of a network currently accessing by the STA 30.

In some embodiments, an address (the address of the device that sends the packet) recorded in the source address field in the uplink packet may be the MAC address of the STA 30.

S907: The AC 10 creates the forwarding entry corresponding to the STA 30 based on the uplink packet.

After receiving the uplink packet, the AC 10 may create the forwarding entry corresponding to the STA 30 in the forwarding table of the AC 10 based on the uplink packet.

For example, the AC 10 may obtain the address (the MAC address of the STA 30: MAC1) recorded in a source address field in the uplink packet, and create the forwarding entry "MAC1→eth2" corresponding to the STA 30.

S908: The AC 10 transmits data to the STA30 through the AP 22 based on the created forwarding entry.

After creating the forwarding entry corresponding to the STA 30, the AC 10 may transmit the data to the STA 30 through the AP 22 based on the created forwarding entry.

For example, the AC 10 may forward the buffered data corresponding to the STA 30 and other data to be transmitted to the STA 30 to the AP 22 connected to the Ethernet interface eth.2, and then the AP 22 transmits the data to the STA 30 through the wireless network.

Based on the foregoing method, in a process in which the STA 30 roams from the AP 21 to the AP 22, the AC 10 may delete, in time, the previously stored forwarding entry corresponding to the STA 30, and create the new forwarding entry corresponding to the STA 30. In this way, the AC 10 can send the data corresponding to the STA 30 to the AP 22 in time. This helps reduce a packet loss amount of the data sent by the AC 10 to the STA 30, and avoid network freezing of the STA 30.

The following describes a technical solution in which an AP connected to a STA after roaming triggers an AC to update a forwarding entry of the STA.

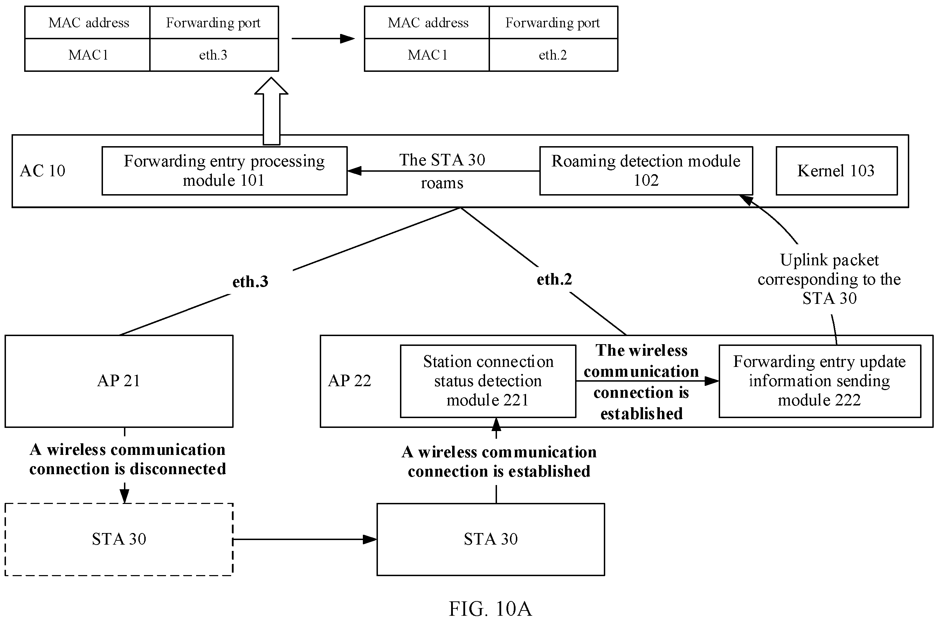

For example, FIG. 10A is a diagram of an implementation process of another communication method according to some embodiments of this application.

Refer to FIG. 10A. A forwarding entry processing module 101 and a roaming detection module 102 are disposed in the AC 10, and a station connection status detection module 221 and a forwarding entry update information sending module 222 are disposed in the AP 22.

The STA 30 is first connected to the AP 21, and performs data transmission through the AP 21 and the AC 10 (for example, accessing the Internet through the AC 10 or accessing another device connected to the AC 10). In a case in which network quality of the AP 22 is higher than that of the AP 21, the STA 30 may disconnect a wireless communication connection to the AP 21, and roam to the AP 22.

After detecting that the wireless communication connection between the STA 30 and the AP 22 is established, the station connection status detection module 221 may send a detection result to the forwarding entry update information sending module 222. The forwarding entry update information sending module 222 may send the uplink packet corresponding to the STA 30 to the roaming detection module 102 of the AC 10 in response to the detection result. After receiving the uplink packet corresponding to the STA 30, the roaming detection module 102 of the AC 10 may determine, in a case in which the current forwarding port (the Ethernet interface eth.2 connected to the AP 22) of the STA 30 is different from the forwarding port (the Ethernet interface eth.3 connected to the AP 21) when the STA 30 is connected to the AC 10 last time, that the STA 30 is connected to the AP 22 in a roaming manner. Then, the roaming detection module 102 may send a roaming message of the STA 30 (which indicates that the STA 30 is connected to the AP 22 in a roaming manner) to the forwarding entry processing module 101. The forwarding entry processing module 101 may update the forwarding entry of the STA 30 in the forwarding table from "MAC1→eth.3" to the forwarding entry "MAC1→eth.2" in response to the roaming message of the STA 30. Then, the AC 10 may transmit the data corresponding to the STA 30 to the STA 30 through the AP 22 based on the updated forwarding entry "MAC1→eth2".

In this way, after the wireless communication connection between the STA 30 and the AP 21 is disconnected, the AC 10 may update the forwarding entry corresponding to the STA 30 in time. This helps reduce a packet loss amount of the data sent by the AC 10 to the STA 30, and avoid network freezing.

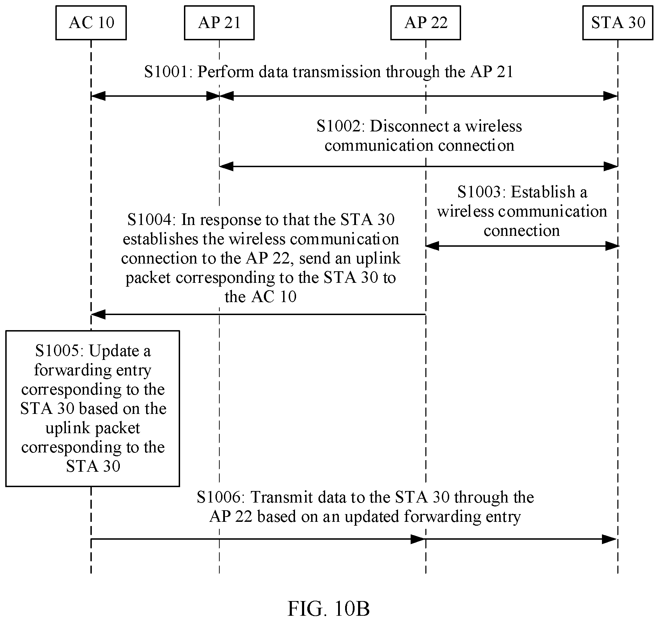

With reference to the process shown in FIG. 10A, FIG. 10B is a schematic flowchart of an interaction of still another communication method according to some embodiments of this application. As shown in FIG. 10B, the communication method may include the following steps.

S1001: The STA 30 performs data transmission with the AC 10 through the AP 21.

The STA 30 is connected to the AP 21 through the wireless network, and performs data transmission with the AC 10 through the AP 21. For details, refer to the foregoing step S801. Details are not described herein again.

S1002: The STA 30 disconnects the wireless communication connection to the AP 21.

When determining to roam to another AP (for example, the AP 22) (for example, when network quality provided by the AP 22 is higher than network quality provided by the AP 21), the STA 30 may disconnect the wireless communication connection to the AP 21.

S1003: The STA 30 establishes a wireless communication connection to the AP 22.

After disconnecting the wireless communication connection to the AP 21, the STA 30 may establish the wireless communication connection to the AP 22.

S1004: In response to that the STA 30 establishes the wireless communication connection to the AP 22, the AP 22 sends the uplink packet corresponding to the STA 30 to the AC 10.

In response to that the STA 30 establishes the wireless communication connection to the AP 22, the AP 22 may send the uplink packet corresponding to the STA 30 to the AC 10.

In some embodiments, a packet sending device recorded in the uplink packet corresponding to the STA 30 is the STA 30. For example, an address recorded in a source address field in the uplink packet corresponding to the STA 30 may be the MAC address of the STA 30: MAC1.

In some embodiments, the uplink packet corresponding to the STA 30 may be any one of the following packets: an ARP packet, an STP packet, and an ICMP packet whose destination device is the AC 10.

In some embodiments, the AP 22 may send the uplink packet corresponding to the STA 30 to the AC 10 through a data channel between the AP 22 and the AC 10.

In some embodiments, when the station connection status detection module 221 detects that the STA 30 establishes the wireless communication connection to the AP 22, the AP 22 may send the uplink packet corresponding to the STA 30 to the AC 10 through the forwarding entry update information sending module 222.

S1005: The AC 10 updates the forwarding entry corresponding to the STA 30 based on the uplink packet corresponding to the STA 30.

After receiving the uplink packet corresponding to the STA 30, the AC 10 may query the forwarding entry corresponding to the STA 30 from the AC 10 based on a STA identifier of the sending device (the STA 30) of the uplink packet recorded in the uplink packet corresponding to the STA 30, and update the forwarding port in the found forwarding entry to the current forwarding port of the STA 30 (the Ethernet interface eth.2 connected to the AP 22).

For example, in some embodiments, the address recorded in the source address field in the uplink packet is MAC1, and the AC 10 may find, based on MAC1, that the forwarding entry "MAC1→eth.3" corresponding to the STA 30 is updated to "MAC1→eth2".

In some embodiments, when the roaming detection module 102 determines that the current forwarding port (the Ethernet interface eth.2 connected to the AP 22) of the STA 30 is different from the forwarding port (the Ethernet interface eth.3 connected to the AP 21) used when the STA 30 is connected to the AC 10 last time, the AC 10 may update the forwarding entry of the STA 30 in the forwarding table from "MAC1→eth.3" to the forwarding entry "MAC1→eth2" through the forwarding entry processing module 101.

S1006: The AC 10 transmits data to the STA 30 through the AP 22 based on the updated forwarding entry.

After updating the forwarding entry corresponding to the STA 30, the AC 10 may transmit data to the STA 30 through the AP 22 based on the updated forwarding entry.

For example, the AC 10 may transmit, to the AP 22 through the Ethernet interface eth.2, data to be transmitted to the STA 30, and then the AP 22 transmits the data to the STA 30 through the wireless network.

Based on the foregoing method, in a process in which the STA 30 roams from the AP 21 to the AP 22, the AC 10 may update, in time based on the uplink packet that corresponds to the STA 30 and that is sent by the AP 22, the forwarding entry corresponding to the STA 30, so that the AC 10 can send the data corresponding to the STA 30 to the AP 22 in time. This helps reduce a packet loss amount of the data sent by the AC 10 to the STA 30, and avoid network freezing of the STA 30.

The following describes a technical solution in which an AP connected to a STA before roaming and an AP connected to the STA after roaming jointly trigger an AC to update a forwarding entry of the STA.

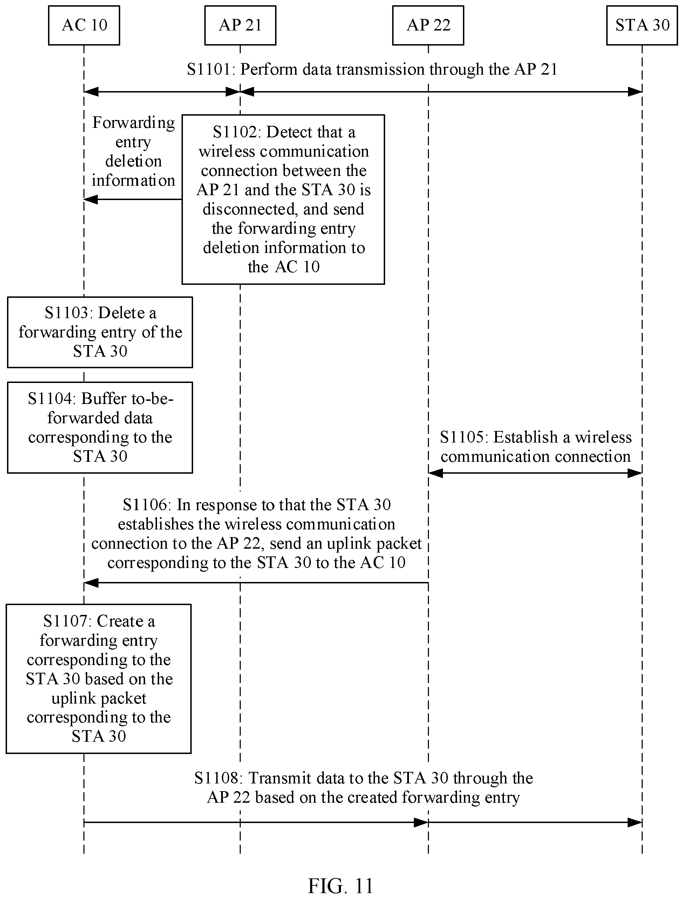

FIG. 11 is a schematic flowchart of an interaction of yet another communication method according to some embodiments of this application. As shown in FIG. 11, the interaction process includes the following steps.

S1101: The STA 30 performs data transmission with the AC 10 through the AP 21.

The STA 30 is connected to the AP 21 through the wireless network, and performs data transmission with the AC 10 through the AP 21. For details refer to the foregoing S801. Details are not described herein again.

S1102: The AP 21 detects that the wireless communication connection between the AP 21 and the STA 30 is disconnected, and sends the forwarding entry deletion information to the AC 10.

For example, the AP 21 may listen to an NL80211_CMD_DEL_STATION message based on the station connection status detection module 211, and send the forwarding entry deletion information to the AC 10 when detecting an NL80211_CMD_DEL_STATION message corresponding to the STA30.

S1103: The AC 10 deletes the forwarding entry of the STA 30.

In response to the forwarding entry deletion information, the AC 10 deletes, based on the STA identifier of the STA 30, the forwarding entry corresponding to the STA 30 from the forwarding table of the AC 10. For details, refer to the foregoing step S803. Details are not described herein again.

S1104: The AC 10 buffers to-be-forwarded data corresponding to the STA 30.

After deleting the forwarding entry of the STA 30 from the forwarding table of the AC 10, the AC 10 may buffer the to-be-forwarded data corresponding to the STA 30.

S1105: The STA 30 establishes the wireless communication connection to the AP 22.

In some embodiments, step S1105 may be performed before step S1103, or may be performed in parallel with step S1103 and step S1104. This is not limited herein.

S1106: In response to that the STA 30 establishes the wireless communication connection to the AP 22, the AP 22 sends the uplink packet corresponding to the STA 30 to the AC 10.

In response to that the STA 30 establishes the wireless communication connection to the AP 22, the AP 22 may send the uplink packet corresponding to the STA30 to the AC 10. For details, refer to the foregoing step S1004. Details are not described herein again.

S1107: The AC 10 creates the forwarding entry corresponding to the STA 30 based on the uplink packet corresponding to the STA 30.

After receiving the uplink packet corresponding to the STA 30, the AC 10 may create the forwarding entry (for example, the foregoing forwarding entry "MAC1→eth.2") corresponding to the STA 30 based on the STA identifier of the sending device (the STA 30) of the uplink packet recorded in the uplink packet corresponding to the STA 30.

S1108: The AC 10 transmits data to the STA 30 through the AP 22 based on the created forwarding entry.

After creating the forwarding entry corresponding to the STA 30, the AC 10 may transmit data to the STA 30 through the AP 22 based on the created forwarding entry.

Based on the foregoing method, in a process in which the STA 30 roams from the AP 21 to the AP 22, the AC 10 may update, in time based on the forwarding entry deletion information sent by the AP 21 and the uplink packet that corresponds to the STA 30 and that is sent by the AP 22, the forwarding entry corresponding to the STA 30, so that the AC 10 can send the data corresponding to the STA 30 to the AP 22 in time. This helps reduce a packet loss amount of the data sent by the AC 10 to the STA 30, and avoid network freezing of the STA 30.

An embodiment of this application further provides a device 100. One or more of the AP, the AC, and the STA in embodiments of this application may use a structure of the device 100.

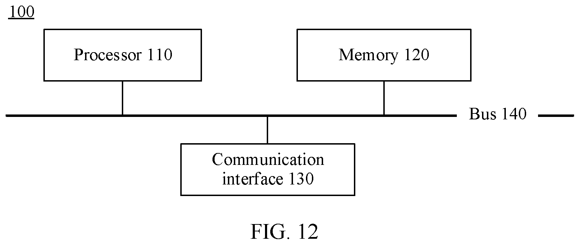

FIG. 12 is a diagram of the structure of the device 100 according to some embodiments of this application.

As shown in FIG. 12, the device 100 includes a processor 110, a memory 120, a communication interface 130, and a bus 140.

The processor 110 may include one or more processing units. For example, the processor 110 may include a central processing unit (central processing unit, CPU), a modem processor, a graphics processing unit (graphics processing unit, GPU), an image signal processor (image signal processor, ISP), a microcontroller unit (microcontroller unit, MCU), a video codec, a digital signal processor (digital signal processor, DSP), a baseband processor, a neural network processor (neural-network processing unit, NPU), a field programmable gate array (field programmable gate array, FPGA), and the like. In some embodiments, different processing units may be independent components, or may be integrated into one or more processors.

In some embodiments, the processor 110 may be configured to execute one or more programs to implement the methods provided in the foregoing embodiments.

For example, when the device 100 is an AC, the processor 110 may be configured to: execute an instruction of receiving forwarding entry deletion information from another device (for example, an AP) and deleting a forwarding entry corresponding to a STA, execute an instruction of receiving an uplink packet of the corresponding STA from another device and updating the forwarding entry corresponding to the STA, execute an instruction for determining whether the STA is connected to the AC in a roaming manner, execute an instruction for forwarding data to an AP connected to the STA based on the forwarding entry, execute an instruction for caching data forwarded to the STA, execute an instruction for sending an ARP request packet, and the like.

For another example, when the device 100 is an AP, the processor 110 may be configured to: execute an instruction of detecting a status of a wireless communication connection between a STA and the device 100, execute an instruction of sending a forwarding entry deletion message to an AC when the wireless communication connection between the STA and the device 100 is disconnected, execute an instruction for sending an uplink packet corresponding to the STA to the AC when a wireless communication connection between the STA and the device 100 is established, execute an instruction for transmitting data sent by the AC to the STA through a wireless network, and the like.

For another example, when the device 100 is a STA, the processor 100 may be configured to: execute an instruction of roaming to an AP when network quality of a network provided by the AP is higher than that of an AP currently connected to the device 100, execute an instruction of sending an ARP response packet to an AC in response to an ARP request packet sent by the AC, and the like.

The memory 120 may include one or more memories configured to store data or program code. For example, in some embodiments, the memory 120 may be configured to store data sent by another device. For another example, in some embodiments, the memory 120 may be configured to store instructions of the communication methods provided in the foregoing embodiments.

In some embodiments, the memory 120 may include a hard disk drive, a solid-state drive, a flash memory, an optical disc, or a magneto-optical disc.

In some embodiments, the memory 120 may include a removable, non-removable, or fixed medium.

In some embodiments, the memory 120 may be inside or outside the device 100.

The communication interface 130 is configured to implement communication between the device 100 and another device. The communication interface 130 may include a wired or wireless communication interface (for example, the Ethernet interface eth.0, the Ethernet interface eth.1, the Ethernet interface eth.2, or the Ethernet interface eth.3), so that the device 100 can communicate with another device through a wired or wireless network.

For example, when the device 100 is an AC, the device 100 may be connected to the Internet or an AP device through the communication interface 130.

For another example, when the device 100 is an AP, the device 100 may be connected to an AC device or a STA device through the communication interface 130.

For another example, when the device 100 is a STA, the device 100 may be connected to an AP through a communication interface.

The bus 140 is configured to connect the processor 110, the memory 120, the communication interface 130, and another possible module or circuit.

It should be understood that the structure of the device 100 in FIG. 12 is merely an example. In some other embodiments, the device 100 may include more or fewer modules. This is not limited herein.

An embodiment of this application further provides a program product. When the program product runs on a device, the device may be enabled to implement the communication methods provided in the foregoing embodiments.

An embodiment of this application further provides a readable storage medium. The readable storage medium stores one or more programs. When the one or more programs are executed by a device, the device implements the communication method provided in the foregoing embodiments.

An embodiment of this application further provides a system. The system includes the AP 21 and the AC 10 provided in the foregoing embodiments.

An embodiment of this application further provides a system. The system includes the AP 22 and the AC 10 provided in the foregoing embodiments.

An embodiment of this application further provides a system. The system includes the AP 21, the AP 22 and the AC 10 provided in the foregoing embodiments.

In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that in the examples and this specification of this patent, relational terms such as first and second are used only to differentiate an entity or operation from another entity or operation, and do not require or imply that any actual relationship or sequence exists between these entities or operations. Furthermore, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

## Claims

1. A communication method, comprising:
connecting a first device to a second device, wherein the second device serves as a station to access a wireless access point provided by the first device, and an access controller of the first device is a third device; and
detecting, by the first device, that a wireless communication connection between the first device and the second device is disconnected, and sending first information to the third device, wherein the first information indicates the third device to delete a forwarding entry corresponding to the second device from a forwarding table of the third device.

2. The method according to claim 1, wherein the detecting, by the first device, that a wireless communication connection between the first device and the second device is disconnected, and sending first information to the third device comprises:
detecting, by the first device, that the wireless communication connection between the first device and the second device is disconnected, and sending the first information to the third device through a management channel between the first device and the third device.

3. The method according to claim 1 or 2, wherein the first information comprises an identifier of the second device, and the identifier comprises at least one of a media access control address, a device serial number, a device name, and an Internet protocol address.

4. A communication method, comprising:
receiving, by a third device, first information sent by a first device, wherein the first information is sent when the first device detects that a wireless communication connection between the first device and a second device is disconnected, the third device is an access controller of the first device, and the second device serves as a station to access a wireless access point provided by the first device; and
deleting, by the third device in response to the first information, a forwarding entry corresponding to the second device from a forwarding table of the third device.

5. The method according to claim 4, wherein the method further comprises:
after deleting the forwarding entry corresponding to the second device, sending, by the third device, an address resolution protocol request packet for an Internet protocol address of the second device; and
receiving, by the third device, an address resolution protocol response packet that is sent by the second device and that corresponds to the address resolution protocol request packet, and creating, in the forwarding table, a first forwarding entry corresponding to the second device, wherein a forwarding port in the first forwarding entry is a communication port between the wireless access point currently connected to the second device and the third device.

6. The method according to claim 4, wherein the method further comprises:
receiving, by the third device, a first packet, wherein a sending device recorded in the first packet is the second device; and
creating, by the third device in the forwarding table, a first forwarding entry corresponding to the second device, wherein a forwarding port in the first forwarding entry is a communication port between the wireless network access point currently connected to the second device and the third device.

7. The method according to claim 5 or 6, wherein the method further comprises:
buffering, by the third device, first data corresponding to the second device after deleting the forwarding entry corresponding to the second device; and
transmitting, by the third device, the first data to the second device based on the first forwarding entry.

8. A communication method, comprising:
establishing, by a fourth device, a wireless communication connection to a second device, wherein the second device serves as a station to access a wireless access point provided by the fourth device, an access controller of the fourth device is a third device, and the fourth device communicates with the third device through a first port; and
sending, by the fourth device, a second packet to the third device, wherein the second packet indicates the third device to update a forwarding port in a forwarding entry that is in a forwarding table of the third device and that corresponds to the second device to the first port, and a media access control address recorded in a source address field of the second packet is a media access control address of the second device.

9. The method according to claim 8, wherein the second packet is any one of the following packets: an address resolution protocol packet, a spanning tree protocol packet, and an Internet control message protocol packet whose destination device is the third device.

10. A first device, comprising:
a memory, configured to store one or more programs; and
a processor, configured to execute the one or more programs, so that the device implements the communication method according to any one of claims 1 to 3.

11. A third device, comprising:
a memory, configured to store one or more programs; and
a processor, configured to execute the one or more programs, so that the device implements the communication method according to any one of claims 4 to 7.

12. A fourth device, comprising:
a memory, configured to store one or more programs; and
a processor, configured to execute the one or more programs, so that the device implements the communication method according to claim 8 or 9.

13. A system, wherein the system comprises the first device according to claim 10 and the third device according to claim 11.

14. A readable storage medium, wherein the readable storage medium comprises one or more programs, and when the one or more programs are executed on a device, the device is enabled to implement the communication method according to any one of claims 1 to 3, or the communication method according to any one of claims 4 to 7, or the communication method according to claim 8 or 9.
